(19) Europäisches Patentamt
European Patent Office
Office européen des brevets

(11) **EP 4 261 756 B1**

(12) **EUROPEAN PATENT SPECIFICATION**

(45) Date of publication and mention
of the grant of the patent:
**11.02.2026 Bulletin 2026/07**

(21) Application number: **23168139.6**

(22) Date of filing: **15.04.2023**

(51) International Patent Classification (IPC):
*G06N 20/00* (2019.01)    *G06N 3/098* (2023.01)

(52) Cooperative Patent Classification (CPC):
**G06N 20/00**

(54) **MODEL GRADIENT DETERMINING METHODS, APPARATUSES, DEVICES, AND MEDIA BASED ON FEDERATED LEARNING**

VERFAHREN, VORRICHTUNGEN, VORRICHTUNGEN UND MEDIEN ZUR BESTIMMUNG VON MODELLGRADIENTEN AUF DER BASIS VON FÖDERIERTEM LERNEN

PROCÉDÉS, APPAREILS, DISPOSITIFS ET SUPPORTS DE DÉTERMINATION DE GRADIENT DE MODÈLE BASÉS SUR UN APPRENTISSAGE FÉDÉRÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.04.2022 CN 202210399999**

(43) Date of publication of application:
**18.10.2023 Bulletin 2023/42**

(73) Proprietor: **Alipay (Hangzhou) Information Technology Co., Ltd.**
**Hangzhou, Zhejiang 310000 (CN)**

(72) Inventors:
• **SHI, Zhuan**
**Hangzhou, Zhejiang, 310000 (CN)**
• **LI, Wang**
**Hangzhou, Zhejiang, 310000 (CN)**

(74) Representative: **Fish & Richardson P.C.**
**Highlight Business Towers**
**Mies-van-der-Rohe-Straße 8**
**80807 München (DE)**

(56) References cited:
• **GAO LIANG GAOLIANG GL@OUTLOOK COM ET AL: "FIFL: A Fair Incentive Mechanism for Federated Learning", THE 2021 7TH INTERNATIONAL CONFERENCE ON INDUSTRIAL AND BUSINESS ENGINEERING, ACMPUB27, NEW YORK, NY, USA, 9 August 2021 (2021-08-09), pages 1 - 10, XP058864438, ISBN: 978-1-4503-9799-5, DOI: 10.1145/ 3472456.3472469**
• **XINYI XU ET AL: "Towards Building a Robust and Fair Federated Learning System", ARXIV.ORG, CORNELL UNIVERSITY LIBRARY, 201 OLIN LIBRARY CORNELL UNIVERSITY ITHACA, NY 14853, 20 November 2020 (2020-11-20), XP081818763**
• **CHEN HAOYU ET AL: "RepBFL: Reputation Based Blockchain-Enabled Federated Learning Framework for Data Sharing in Internet of Vehicles", 16 March 2022, 20220316, PAGE(S) 536 - 547, XP047620646**

## Description

### TECHNICAL FIELD

This application relates to the field of computer technologies, and in particular, to model gradient determining methods, apparatuses, devices, and media based on federated learning.

### BACKGROUND

As the society becomes more and more aware of the necessity of data privacy, emerging laws such as the General Data Protection Regulation (GDPR) impose strict restrictions on data circulation, leading to an increasingly severe problem of data islands. As an emerging privacy protection distributed machine learning method, federated learning provides a new idea for alleviating the problem of data islands. However, a plurality of data owners participate in current federated learning training to obtain a unified training model so that models obtained by participants are the same, and it is unable to provide participants with different models based on different scenarios.

Therefore, how to provide different models for different participants in federated learning is an urgent technical problem to be alleviated. Relevant prior art is: D1: GAO LIANG ET AL: "FIFL: A Fair Incentive Mechanism for Federated Learning" (DOI: 10.1145/3472456.3472469); D2: XINYI XU ET AL: "Towards Building a Robust and Fair Federated Learning System" ARXIV.ORG, (2020-11-20); D3: CHEN HAOYU ET AL: "RepBFL: Reputation Based Blockchain-Enabled Federated Learning Framework for Data Sharing in Internet of Vehicles" (2022-03-16).

### SUMMARY

Embodiments of this specification provide model gradient determining methods, apparatuses, devices, and media based on federated learning, to alleviate a problem that models obtained by participants in existing federated learning are consistent.

To alleviate the previous technical problem, the embodiments of this specification are implemented as follows:

Some embodiments of this specification provide a model gradient determining method based on federated learning, including: obtaining data volume information of a participating node, where the data volume information is used to indicate an amount of data used by the participating node to train a basic training model based on local data, and the local data includes user data of a target organization corresponding to the participating node; obtaining a node local gradient obtained by training the basic training model based on the local data by the participating node; determining, based on the data volume information and the node local gradient, a global gradient of a federated learning model that the participating node participates in; determining a degree of participation of the participating node based on the node local gradient of the participating node and the global gradient, where the degree of participation is used to indicate a degree of participation of the participating node in federated learning model training; and determining an actual model gradient of the participating node based on the degree of participation.

Some embodiments of this specification provide a model gradient determining apparatus based on federated learning, including: a volume information acquisition module, configured to obtain data volume information of a participating node, where the data volume information is used to indicate an amount of data used by the participating node to train a basic training model based on local data, and the local data includes user data of a target organization corresponding to the participating node; a local gradient acquisition module, configured to obtain a node local gradient obtained by training the basic training model based on the local data by the participating node; a global gradient determining module, configured to determine, based on the data volume information and the node local gradient, a global gradient of a federated learning model that the participating node participates in; a degree-of-participation determining module, configured to determine a degree of participation of the participating node based on the node local gradient of the participating node and the global gradient, where the degree of participation is used to indicate a degree of participation of the participating node in federated learning model training; and an actual gradient determining module, configured to determine an actual model gradient of the participating node based on the degree of participation.

Some embodiments of this specification provide a model gradient determining device based on federated learning, including: at least one processor; and a memory communicatively connected to the at least one processor, where the memory stores an instruction that can be executed by the at least one processor, and the instruction is executed by the at least one processor so that the at least one processor can: obtain data volume information of a participating node, where the data volume information is used to indicate an amount of data used by the participating node to train a basic training model based on local data, and the local data includes user data of a target organization corresponding to the participating node; obtain a node local gradient obtained by training the basic training model based on the local data by the participating node; determine, based on the data volume information and the node local gradient, a global gradient of a federated learning model that the participating node participates in; determine a degree of participation of the participating node based on the node local gradient of the participating node and the global gradient, where the degree of participation is used to indicate a degree of participation of the participating node in federated learning model training; and determine an actual model gradient of the participating node based on the degree of participation.

Some embodiments of this specification provide a computer-readable medium, storing a computer-readable instruction, where when the computer-readable instruction can be executed by a processor to implement a model gradient determining method based on federated learning.

Embodiments of this specification can achieve the following beneficial effects: in the embodiments of this specification, when federated learning is performed, the data volume information used by the participating node to train the basic training model based on the local data as well as the node local gradient provided by the participating node can be obtained, the global gradient of the federated learning model can be determined, the degree of participation of the participating node can be determined based on the node local gradient and the global gradient, and then the actual model gradient available to the participating node can be determined based on the degree of participation. In this way, different model gradients can be assigned to different participating nodes in the federated learning process so that different federated learning models can be obtained for different participating nodes.

## BRIEF DESCRIPTION OF DRAWINGS

To describe the technical solutions in the embodiments of this specification or in the existing technology more clearly, the following briefly describes the accompanying drawings needed for describing the embodiments or the existing technology. Clearly, the accompanying drawings in the following description merely show some embodiments of this application, and a person of ordinary skill in the art can still derive other drawings from these accompanying drawings without creative efforts.

FIG. 1 is a schematic diagram illustrating an application scenario of a model gradient determining method based on federated learning according to some embodiments of this specification;

FIG. 2 is a schematic flowchart illustrating a model gradient determining method based on federated learning according to some embodiments of this specification;

FIG. 3 is a swimlane diagram illustrating a model gradient determining method based on federated learning according to some embodiments of this specification;

FIG. 4 is a schematic structural diagram of a model gradient determining apparatus based on federated learning according to some embodiments of this specification; and

FIG. 5 is a schematic structural diagram of a model gradient determining device based on federated learning according to some embodiments of this specification.

## DESCRIPTION OF EMBODIMENTS

To make the objectives, technical solutions, and advantages of one or more embodiments of this specification clearer, the following clearly and comprehensively describes the technical solutions of the one or more embodiments of this specification with reference to specific embodiments and accompanying drawings of this specification. Clearly, the described embodiments are merely some rather than all of the embodiments of this specification. Other embodiments obtained by a person of ordinary skill in the art based on the embodiments of this specification without creative efforts shall fall within the protection scope of one or more embodiments of this specification.

The following describes in detail the technical solutions in the embodiments of this specification with reference to the accompanying drawings.

In the existing technology, federated learning usually needs each participant to obtain a model from a server; then each participant uses local data to train the model, and uploads obtained model gradient data to the server. The server aggregates each piece of gradient data to obtain an updated model parameter or gradient, and then sends the updated model parameter or gradient to each participant so that each participant can obtain a unified model obtained through federated learning.

To alleviate the defects in the existing technology, the technical solutions of this specification provide the following embodiments:

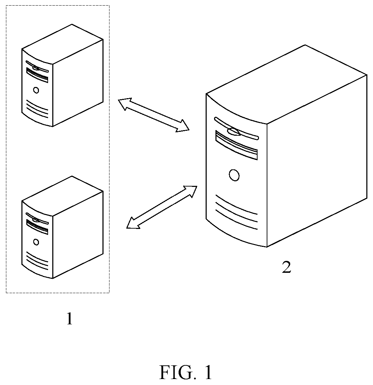

FIG. 1 is a schematic diagram illustrating an application scenario of a model gradient determining method based on federated learning according to some embodiments of this specification. As shown in FIG. 1, the solutions can include the following: participating nodes 1 and a server 2 participating in federated learning. The participating nodes 1 participating in the federated learning can include a plurality of participating nodes, and the server 2 can obtain model gradients provided by the plurality of participating nodes, and then perform aggregation to obtain a federated learning model. In the embodiments of this specification, the participating nodes 2 can train a basic training model based on local data of the participating nodes, and feed back model parameters of the trained model or node local gradients to the server;

and the server 2 can further obtain data volume information of training data collected by the participating nodes during model training, and obtain a global gradient of the federated learning model based on the data volume information of the participating nodes and the model parameters or the node local gradients provided by the participating nodes. In the embodiments of this specification, the server 2 can further determine degrees of participation of the participating nodes in the federated learning based on the node local gradients of the participating nodes 1 and the global gradient, and then determine actual model gradients matching the participating nodes based on the degrees of participation.

Next, a model gradient determining method based on federated learning provided in some embodiments of this specification is described in detail with reference to the accompanying drawings:

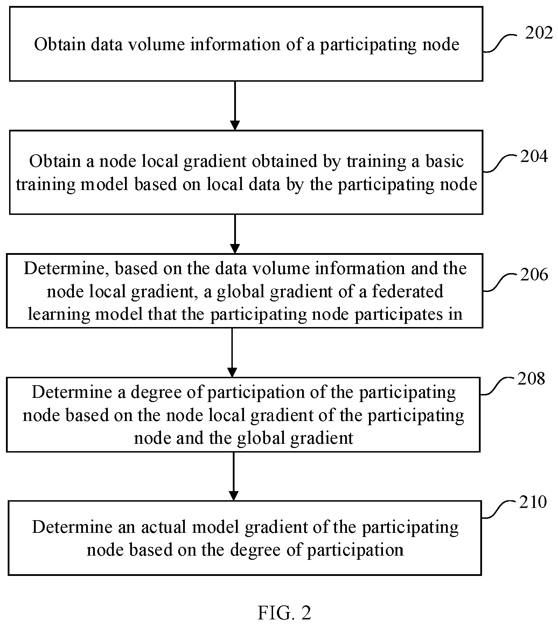

FIG. 2 is a schematic flowchart illustrating a model gradient determining method based on federated learning according to some embodiments of this specification. From a program perspective, the procedure can be executed by a program or an application client mounted on an application server.

As shown in FIG. 2, the procedure can include the following steps:

Step 202: Obtain data volume information of a participating node, where the data volume information is used to indicate an amount of data used by the participating node to train a basic training model based on local data, and the local data includes user data of a target organization corresponding to the participating node.

Step 204: Obtain a node local gradient obtained by training the basic training model based on the local data by the participating node.

In the embodiments of this specification, a participating node can be any one of a plurality of participating nodes participating in federated learning. The participating node can represent various organizations participating in the federated learning, including organizations that provide services such as resource processing, payment, leasing, and online and offline transactions. The user data can include user data retained by a user in the target organization. For example, the user data can include service data and transaction records of the user handling services in the target organization, can also include registration information provided by the user to the target organization, and can also include browsing records of the user in the target organization.

The participating node can train the basic training model based on data obtained by the participating node, to obtain the node local gradient, and send the node local gradient and the data volume information participating in the training to the server. The data volume information can include an amount of data indicating training data used for model training, and the training data does not need to be sent to the server. It can be ensured that data of the participating node does not leave the domain, and security of the data can be improved.

The basic training model can represent the latest training model existing in the participating node. In practice, the basic training model can be a model to be trained provided by the server to the participating node. The federated learning can use a plurality of rounds of iterative learning. For the first round of training, the server can send the basic training model to each participating node; after the participating node uses local data to train the model, the trained model or a model parameter can be temporarily stored. In subsequent rounds of training, a model obtained after previous rounds can be updated and trained. In this case, the basic training model can represent the model obtained after the previous rounds of training.

Step 206: Determine, based on the data volume information and the node local gradient, a global gradient of a federated learning model that the participating node participates in.

In practice, in the federated learning, the global gradient is usually obtained just by aggregating the node local gradient provided by the participating node. In the embodiments of this specification, the global gradient of the federated learning model can be obtained with reference to the data volume information of the participating node. Accuracy of the global gradient can be improved.

Step 208: Determine a degree of participation of the participating node based on the node local gradient of the participating node and the global gradient, where the degree of participation is used to indicate a degree of participation of the participating node in federated learning model training.

In practice, due to the impacts of a computing capability of a participating node or quality or an amount of training data, different participating nodes may have different degrees of participation in the federated learning process. For example, the node local gradient provided by the participating node that uses training data with better quality and a larger data volume for model training has a greater influence on the global gradient, and the participating node can have a higher degree of participation.

Step 210: Determine an actual model gradient of the participating node based on the degree of participation.

The server can send the determined actual model gradient of the participating node to a corresponding participating node so that the participating node can obtain a federated learning model that matches the participating node. In practice, the server can further determine the federated learning model that matches the participating node or a model parameter based on the determined actual model gradient of the participating node, and can also send the federated learning model or the model parameter to the participating node. The federated learning model can include a model for evaluation, for example, a risk evaluation model, a reputation evaluation model, or a profit and loss evaluation model.

In the embodiments of this specification, when federated learning is performed, the data volume information used by the participating node to train the basic training model based on the local data as well as the node local gradient provided by the participating node can be obtained, the global gradient of the federated learning model can be determined, the degree of participation of the participating node can be determined based on the node local gradient and the global gradient, and then the actual model gradient available to the participating node can be determined based on the degree of participation. In this way, different model gradients can be assigned to different participating nodes in the federated learning process so that different federated learning models can be obtained for different participating nodes.

It should be understood that in the methods described in one or more embodiments of this specification, the order of some steps can be exchanged based on actual needs, or some steps can be omitted or deleted.

Based on the method in FIG. 2, the embodiments of this specification further provide some specific implementations of the method, which are described below.

To improve accuracy of the global gradient in the federated learning, data quality of participating nodes can also be incorporated into determining of the global gradient in the embodiments of this specification. Optionally, in the embodiments of this specification, after the obtaining a node local gradient obtained by training the basic training model based on the local data by the participating node, the method can further include the following: obtaining a marginal loss of the participating node, where the marginal loss is used to represent a degree of influence of the node local gradient of the participating node on performance of the federated learning model; and determining node mass of the participating node based on the marginal loss; and the determining, based on the data volume information and the node local gradient, a global gradient of a federated learning model that the participating node participates in can specifically include the following: determining, based on the data volume information, the node local gradient, and the node mass, the global gradient of the federated learning model that the participating node participates in.

The marginal loss can represent a loss of the federated learning model that increases with an increase of participating nodes in the federated learning, and can represent a degree of influence of a node local gradient of a participating node on performance of the federated learning model.

In the embodiments of this specification, the participating node participating in the federated learning model can include a plurality of participating nodes. The obtaining a marginal loss of the participating node can specifically include the following: determining a first reference global model based on a node local gradient of each participating node in the plurality of participating nodes; determining a second reference global model based on a node local gradient of each participating node other than the participating node in the plurality of participating nodes; determining a first model loss of the first reference global model based on a predetermined verification set; determining a second model loss of the second reference global model based on the predetermined verification set; and determining the marginal loss of the participating node based on the first model loss and the second model loss.

As an implementation, assume that in each round t of the federated learning, $M_G^{(t)}$ is used to represent a first global model obtained by aggregating the node local gradients provided by the participating nodes, and $M_{-i}^{(t)}$ is used to represent a second global model obtained by aggregating node local gradients of participating nodes except a participating node i; and $l^{(t)}$ and $l_{-i}^{(t)}$ respectively represent losses of the models $M_G^{(t)}$ and $M_{-i}^{(t)}$ on the validation set. Then, a marginal loss $\delta_i^{(t)}$ can be $\delta_i^{(t)} = l_{-i}^{(t)} - l^{(t)}$ .

Here, $M_G^{(t)} = M_G^{(t-1)} + \dfrac{1}{N}\sum_{j \in W} u_j^{(t)}$ ; $M_{-i}^{(t)} = M_G^{(t-1)} + \dfrac{1}{N-1}\sum_{j \in w'} u_j^{(t)}$ ; $M_G^{(t-1)}$ represents a federated learning model in a $(t-1)^{th}$ round of the federated learning; N represents a total quantity of participating nodes participating in the federated learning; W represents a set of the participating nodes participating in the federated learning, and j represents any participating node participating in the federated learning; $\sum_{j \in W} u_j^{(t)}$ represents the sum of node local gradients of participating nodes in the federated learning; $w'$ represents a set of participating nodes except the participating node i among participating nodes participating in the federated learning; and $\sum_{j \in w'} u_j^{(t)}$ represents the sum of node local gradients of participating nodes other than participating node i.

In practice, the first model loss $l^{(t)}$ of the first reference global model $M_G^{(t)}$ and the second model loss $l_{-i}^{(t)}$ of

the second reference global model $M_{-i}^{(t)}$ can be calculated by using the predetermined verification set based on a loss function.

In the embodiments of this specification, a larger marginal loss $\delta_i^{(t)}$ of the participating node i indicates a more important local gradient of the participating node i in the federated learning. Optionally, in the embodiments of this specification, the determining node mass of the participating node based on the marginal loss can specifically include the following: determining the node mass of the participating node based on a marginal loss of each participating node in the plurality of participating nodes and a normalization algorithm.

In the embodiments of this specification, node mass $m_i^{(t)}$ of the participating node i in the $t^{th}$ round of the federated learning training can be expressed as $m_i^{(t)} = \frac{w_0^{(t)}+w_i^{(t)}}{\sum_i(w_0^{(t)}+w_i^{(t)})}$; $w_0^{(t)}$ represents a constant in the $t^{th}$ round, and $w_i^{(t)} = \frac{\delta_i^{(t)}-min_i(\delta_i^{(t)})}{\sum_i(\delta_i^{(t)}-min_i(\delta_i^{(t)}))}$; $min_i(\delta_i^{(t)})$ represents the smallest marginal loss in marginal losses of the participating nodes in the $t^{th}$ round of the training; and $\sum_i(\delta_i^{(t)} - min_i(\delta_i^{(t)}))$ represents the sum of a difference between a marginal loss of each participating node and the smallest marginal loss in the $t^{th}$ round of the training.

The node mass $m_i^{(t)}$ can also represent a weight of the participating node i in the federated learning, and a local gradient with a larger marginal loss value can correspond to a greater weight. $w_0^{(t)}$ can be a positive number, and it can ensure that the node mass $m_i^{(t)}$ is not equal to 0.

To obtain a more effective global gradient, in the embodiments of this specification, effective participating nodes can also be determined based on marginal losses, and the global gradient can be determined based on node local gradients of the effective participating nodes. The embodiments can also make the aggregated model converge faster and have higher accuracy.

Optionally, the method in the embodiments of this specification can further include the following: determining a participating node with a marginal loss greater than or equal to a predetermined loss threshold in the plurality of participating nodes as an effective participating node; and the determining, based on the data volume information, the node local gradient, and the node mass, the global gradient of the federated learning model that the participating node participates in specifically includes the following: performing an aggregation operation on a node local gradient of each of the effective participating node based on data volume information of the participating node and node mass of the participating node, to obtain the global gradient.

In the embodiments of this specification, a global gradient $u_G^{(t)}$ in the $t^{th}$ round of the training can be obtained based on the following equation: $u_G^{(t)} = \frac{\sum_i m_i^{(t)}|D_i|u_i^{(t)}}{\sum_i m_i^{(t)}|D_i|}$; i represents an effective participating node with a marginal loss greater than or equal to the predetermined loss threshold in the participating node participating in the federated learning; $D_i$ represents a data volume, of the participating node i, of training data used for training based on local data; and $\Sigma_i$ represents the sum of related data for effective participating nodes.

To improve effectiveness of data, node mass of the effective participating node can be calculated when calculating the node mass of the participating node in the embodiments of this specification, where node mass of each effective participating node is determined based on a marginal loss of each effective participating node and the normalization algorithm.

In the above equation $m_i^{(t)} = \frac{w_0^{(t)}+w_i^{(t)}}{\sum_i(w_0^{(t)}+w_i^{(t)})}$, i can represent any node in effective participating nodes, $min_i(\delta_i^{(t)})$ can represent the smallest marginal loss in marginal losses of the effective participating nodes in the $t^{th}$ round of the training; and $\sum_i(\delta_i^{(t)} - min_i(\delta_i^{(t)}))$ represents the sum of a difference between a marginal loss of each effective participating node and the smallest marginal loss in the $t^{th}$ round of the training.

In the embodiments of this specification, the participating node participating in the federated learning model include a plurality of participating nodes, and the degree of participation of the participating node can be represented by a contribution degree of the participating node in the federated learning. The determining a degree of participation of the participating node based on the node local gradient of the participating node and the global gradient can specifically include the following: determining a node contribution degree of each of the plurality of participating nodes based on a node local gradient of the participating node and the global gradient; and determining a relative contribution degree of the participating node based on a node contribution degree of the participating node and the node contribution degree of each participating node.

In the embodiments of this specification, distance mapping of the node local gradients of the participating nodes to the global gradient can be used as a benefit function of contribution evaluation, and then the contribution degrees of the participating nodes can be calculated by using Shapley values. Specifically, in the $t^{th}$ round of the training, a benefit function $V(i)$ of the participating node i can be: $V(i) = \left| u_i^{(t)} \right| \cos\left( u_i^{(t)}, u_G^{(t)} \right)$. Then, the previously described benefit function can be substituted into calculation using the Shapley values, to obtain a node contribution degree $\phi_i^{(t)}: \phi_i^{(t)} = \alpha_i^{(t)} \left| u_i^{(t)} \right| \cos\left( u_i^{(t)}, u_G^{(t)} \right)$ of the participating node i in the $t^{th}$ round, where $\alpha_i^{(t)}$ represents an aggregation weight of the participating node i in the $t^{th}$ round.

In the embodiments of this specification, the Shapley values are used to calculate the contribution degrees of the participating nodes, and the distance mapping of the node local gradients of the participating nodes on the global gradient is used as the benefit function of the Shapley values. The method satisfies the idea of contribution evaluation in cooperative games, overcomes the disadvantage of using only accuracy in related work as a contribution, and has smaller computational overheads than those of real Shapley values, thereby saving resources and improving computational efficiency.

To better reflect stability of the participating node in the entire federated learning, in the embodiments of this specification, the relative contribution degree of the participating node in the entire training process can be further determined based on the contribution degree of the participating node in each round of training. A node cumulative contribution of each participating node can be determined based on a node contribution degree of each participating node; and a relative contribution degree of the participating node is determined based on the node cumulative contribution of the participating node and the largest node cumulative contribution in node cumulative contributions of participating nodes.

As an implementation, a relative contribution degree $z_i^{(t)}$ of the participating node i in the $t^{th}$ round of the training can be expressed as:

$$z_i^{(t)} = \frac{c_i^{(t)}}{max_i(c_i^{(t)})},$$

where

$c_i^{(t)}$ represents a cumulative contribution of the participant i from the 1st round to the $t^{th}$ round t, and

$c_i^{(t)} = max(0, \sum_{i=1}^{t} \emptyset_i^{(t)})$.

In the embodiments of this specification, the actual model gradient of the participating node can be determined based on the relative contribution degree. A higher relative contribution degree of the participating node indicates an actual model gradient obtained by the participating node that is closer to the global gradient.

In the embodiments of this specification, reputations of participating nodes can be further determined based on the historical behavior of the participating nodes, and can also be used to indicate reliability or trustworthiness of the participating nodes. Fluctuations of the participating nodes in the federated learning can be smoothened, and the degrees of participation of the participating nodes can be more accurately determined.

In the embodiments of this specification, the global gradient includes a gradient obtained through a target quantity of rounds of iterative calculations. The determining a degree of participation of the participating node can further include the following: obtaining a trustworthiness parameter of the participating node, where the trustworthiness parameter is used to represent a comprehensive degree of reliability of the participating node in the target quantity of rounds of calculation processes of the global gradient; and determining a reputation degree of the participating node based on the relative contribution degree and the trustworthiness parameter.

As an implementation, in the embodiments of this specification, a reputation degree $r_i^{(t)}$ of the participating

node i in the t$^{th}$ round based on $r_i^{(t)} = q_i^{(t)} z_i^{(t)}$, where $q_i^{(t)}$ represents a trustworthiness parameter of the participating node i in the t$^{th}$ round, and $z_i^{(t)}$ represents a relative contribution degree of the participating node i in the t$^{th}$ round.

In the embodiments of this specification, the obtaining a trustworthiness parameter of the participating node can specifically include the following: determining a first quantity of times that the participating node is determined as an effective participating node in the target quantity of rounds, where the effective participating node represents a participating node with a marginal loss greater than or equal to a predetermined loss threshold; determining a second quantity of times that the participating node is determined as an ineffective participating node in the target quantity of rounds, where the ineffective participating node represents a participating node with a marginal loss less than the predetermined loss threshold; and determining the trustworthiness parameter of the participating node based on the first quantity of times and the second quantity of times.

As an implementation, in the embodiments of this specification, $q_i^{(t)} = ae^{be^{cx_i^{(t)}}}$ can be used to represent the trustworthiness parameters $q_i^{(t)}$ of the participating nodes, can represent degrees of trustworthiness of the participating nodes in the t$^{th}$ round, and can also represent a comprehensive degree of reliability of the participating nodes in the entire federated learning for calculating the global gradient from the 1st round to the t$^{th}$ round, where $x_i^{(t)} = \frac{\beta n_i^{pass} - (1-\beta)n_i^{fail}}{\beta n_i^{pass} + (1-\beta)n_i^{fail}}$, β represents a constant coefficient, and can be set based on actual needs, $n_i^{pass}$ represents a quantity of times that the participating node i is determined as an effective participating node in the training process from the 1st round to the t$^{th}$ round, and $n_i^{fail}$ represents a quantity of times that the participating node i is determined as an ineffective participating node in the training process from the 1st round to the t$^{th}$ round.

In the embodiments of this specification, the global gradient can include a plurality of global gradient factors, the participating node participating in the federated learning model can include a plurality of participating nodes, and the global gradient can include the gradient obtained through the target quantity of rounds of iterative calculations; and the determining an actual model gradient of the participating node based on the degree of participation can specifically include the following: determining a quantity of matching gradients corresponding to the participating node based on a ratio of the reputation degree of the participating node to the greatest reputation degree, where the greatest reputation degree is used to represent the greatest reputation degree in reputation degrees of the plurality of participating nodes; and selecting global gradient factors of the quantity of matching gradients from the global gradient to obtain the actual model gradient.

In the embodiments of this specification, at least some of global gradients can be sent to a corresponding participating node based on a reputation degree of the participating node so that the participating node can obtain a model gradient matching the participating node, and each participating node can obtain a federated learning model that matches the node.

In the embodiments of this specification, a quantity $num_i^{(t)}$ of matching gradients allocated to the participating node i in the t$^{th}$ round can be obtained based on $num_i^{(t)} = \frac{r_i^{(t)}}{max_i r_i^{(t)}} |u_G^{(t)}|$. Here, $|u_G^{(t)}|$ can represent a total quantity of global gradient factors included in the global gradient in the t$^{th}$ round. $r_i^{(t)} \in (0, 1]$, and a participating node with the highest reputation degree can obtain the entire global gradient. In practice, if the calculated quantity $num_i^{(t)}$ of matching gradients includes decimals, the quantity of matching gradients can also be obtained based on rounding methods such as rounding, rounding up, and rounding down.

In practice, when participating nodes use local data for model training, since characteristics of the training data used by different participating nodes may have some differences, different participating nodes may have different degrees of influence on model parameters in a global model. Node local gradients provided by the participating nodes can also reflect the needs of the participating nodes. For example, a node local gradient provided by participating node A emphatically reflects a relationship between a user age and user needs for products, and may have a greater influence on the user age and the user needs for products in the global gradient; a node local gradient provided by participating node B emphatically reflects a relationship between education background of a user and user needs for products, and may have a greater influence on the education background of the user and the user needs for products in the global gradient; and further, gradient factors reflecting a user age and user needs for products in the global gradient are fed back to participating node A, and gradient factors reflecting education background of the user and user needs for products in the global gradient are fed back to participating node B.

To make an actual gradient allocated to the participating nodes more in line with the needs of the participating nodes, in the embodiments of this specification, the degree of influence of each gradient factor in the node local gradient on the global gradient can also be determined based on the node local gradients provided by the participating nodes. A global gradient factor with a greater influence in the global gradient is sent to the participating node.

Optionally, in the embodiments of this specification, the global gradient includes a plurality of global gradient factors, and the node local gradient includes a plurality of local gradient factors; and the method in the embodiments of this specification can further include the following: obtaining a node influence degree of each global gradient factor relative to the participating node, where the node influence degree is used to indicate a degree that each global gradient factor is influenced by the participating node; and sorting the global gradient factors in the global gradient based on the node influence degree, to obtain the sorted global gradient factors; and the selecting global gradient factors of the quantity of matching gradients from the global gradient to obtain the actual model gradient can specifically include the following: selecting global gradient factors of the quantity of matching gradients from the sorted global gradient factors based on a predetermined order, to obtain the actual model gradient.

In practice, global gradient factors in the global gradient can be sorted based on the node influence degree. Optionally, in the embodiments of this specification, the sorting the global gradient factors in the global gradient based on the node influence degree can specifically include the following: sorting the global gradient factors in the global gradient based on the node influence degree in descending order; and the selecting global gradient factors of the quantity of matching gradients from the sorted global gradient factors, to obtain the actual model gradient specifically includes the following: selecting global gradient factors of the top quantity of matching gradients from the global gradient factors sorted in descending order, to obtain the actual model gradient.

Assume that the global gradient includes four global gradient factors M, N, P, and Q, node influence degrees of participating node A on these four global gradient factors are A1, A2, A3, and A4, where A3>A2>A4> A1, and the quantity of matching gradients corresponding to participating node A is 3. It can be determined that the global gradient factors N, P, and Q with top 3 node influence degrees are sent to the participating node.

In practice, the global gradient factors in the global gradient can also be sorted in ascending order based on the node influence degrees, and the factors with the last rankings are determined as the actual model gradient of the participating node. The specific sorting method is not limited here, as long as actual needs can be satisfied.

In the embodiments of this specification, the obtaining a node influence degree of each global gradient factor relative to the participating node can specifically include the following: determining a first distribution parameter corresponding to each local gradient factor in the local gradient of the participating node, where the first distribution parameter is used to indicate a proportion of each local gradient factor in the local gradient; determining a second distribution parameter corresponding to each global gradient factor in the global gradient, where the second parameter is used to indicate a proportion of each global gradient factor in the global gradient; and determining the node influence degree of each global gradient factor relative to the participating node based on the first distribution parameter and the second distribution parameter.

In practice, the global gradient factors in the global gradient can be sorted in predetermined attribute order, and local gradient factors in the node local gradient can also be sorted in the predetermined attribute order.

As an implementation, in the embodiments of this specification, the node influence degree $s_j^{(t)}$ corresponding to the j$^{th}$ node local gradient factor in the node local gradient provided by the participating node i in the t$^{th}$ round, and can be expressed as $s_j^{(t)} = s_{i,j}^{(t)} \times s_{G,j}^{(t)}$, where $s_{i,j}^{(t)}$ represents the first distribution parameter, and $s_{G,j}^{(t)}$ represents the second distribution parameter.

A first distribution parameter $s_{i,j}^{(t)}$ of the j$^{th}$ node local gradient factor in the node local gradient of the participating node i in the t$^{th}$ round can be expressed as $s_{i,j}^{(t)} = \dfrac{u_{i,j}^{(t)}}{\sum_j u_{i,j}^{(t)}}$, where $u_{i,j}^{(t)}$ represents the j$^{th}$ node local gradient factor in the node local gradient of the participating node i in the t$^{th}$ round, and $\sum_j u_{i,j}^{(t)}$ represents the sum of node local gradient factors in node local gradients $u_i^{(t)}$ provided by the participating node i in the t$^{th}$ round.

A second distribution parameter $s_{G,j}^{(t)}$ of the j$^{th}$ global gradient factor in the global gradient in the t$^{th}$ round can be expressed as $s_{G,j}^{(t)} = \frac{u_{G,j}^{(t)}}{\sum_j u_{G,j}^{(t)}}$, where $u_{G,j}^{(t)}$ represents the j$^{th}$ global gradient factor in the global gradient in the t$^{th}$ round, and $\sum_j u_{G,j}^{(t)}$ represents the sum of global gradient factors in the global gradient $u_G^{(t)}$ in the t$^{th}$ round.

In the embodiments of this specification, the marginal loss is used as a measure of data quality of each participating node in a gradient aggregation process, and gradient aggregation is performed in combination with the data quality and quantity. The embodiments can make the aggregated model converge faster and have higher accuracy.

Moreover, in the embodiments of this specification, the data quality and contribution of the participating nodes are comprehensively considered, and a cumulative reputation of the participating nodes is calculated to determine the quantity of gradients allocated to each participating node. When the gradient is selected, the local gradient distribution of the participating nodes is also considered so that the participating nodes can obtain models that match the participating nodes, and participating nodes with higher contributions can obtain higher model accuracy.

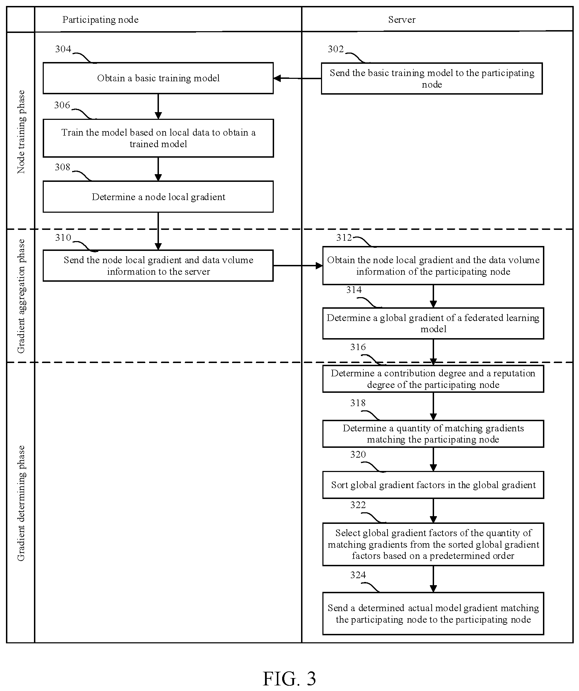

To more clearly illustrate the model gradient determining method based on federated learning provided in the embodiment of this specification, FIG. 3 is a swimlane diagram illustrating a model gradient determining method based on federated learning according to some embodiments of this specification. As shown in FIG. 3, the method can include a node training phase, a gradient aggregation phase, and a gradient determining phase, and can specifically include the following:

Step 302: A server sends a basic training model to each participating node participating in federated learning.

Step 304: The participating node obtains the basic training model.

Step 306: The participating node trains the basic training model based on local data to obtain a trained model.

Step 308: The participating node can determine a node local gradient based on the trained model.

Step 310: The participating node sends, to the server, the node local gradient and data volume information of training data used for training the basic training model based on the local data.

Step 312: The server obtains the node local gradient and the data volume information of the participating node.

In practice, participating node participating in the federated learning can respectively perform step 304 to step 310, and the server can obtain the node local gradient and the data volume information of each participating node.

Step 314: After obtaining the node local gradient and the data volume information sent by each participating node participating in the federated learning, the server can determine, based on the data volume information and the node local gradient, the global gradient of the federated learning model that the participating node participates in.

In the embodiments of this specification, marginal losses of the participating nodes can also be determined based on the node local gradients of the participating nodes, and based on the marginal losses, effective participating nodes and node mass of the participating nodes can be determined from the participating nodes. In the embodiments of this specification, the global gradient of the federated learning model can be determined based on the node local gradients, the data volume information, and node mass of the effective participating nodes, which can effectively improve convergence of the model and improve training efficiency.

Step 316: The server can determine a contribution degree of the participating node based on the node local gradient and the global gradient, and determine a reputation degree of the participating node based on the contribution degree.

Step 318: The server can determine a quantity of matching gradients corresponding to the participating node based on the reputation degree of the participating node.

Step 320: The server determines a node influence degree of each global gradient factor in the global gradient relative to the participating node, sorts the global gradient factors in the global gradient based on the node influence degree, and obtains the sorted global gradient factors.

Step 322: The server selects global gradient factors of the quantity of matching gradients from the sorted global gradient factors based on a predetermined order, to obtain an actual model gradient.

Step 324: The server sends the determined actual model gradient matching the participating node to the participating node.

The server can send the actual model gradient corresponding to each participating node to each participating node, and each participating node can generate a federated learning model based on the actual model gradient that is received by the participating node. For an iterative training process in the federated learning, the participating nodes can update training models of the participating nodes based on the received actual model gradients to obtain the latest version of the training model, where the latest version of the training model can be considered as the basic training model. Then the participating nodes can train the latest version of the training model based on the data about the participating nodes, and feed back, to the server for aggregation, the node local gradient obtained from the training.

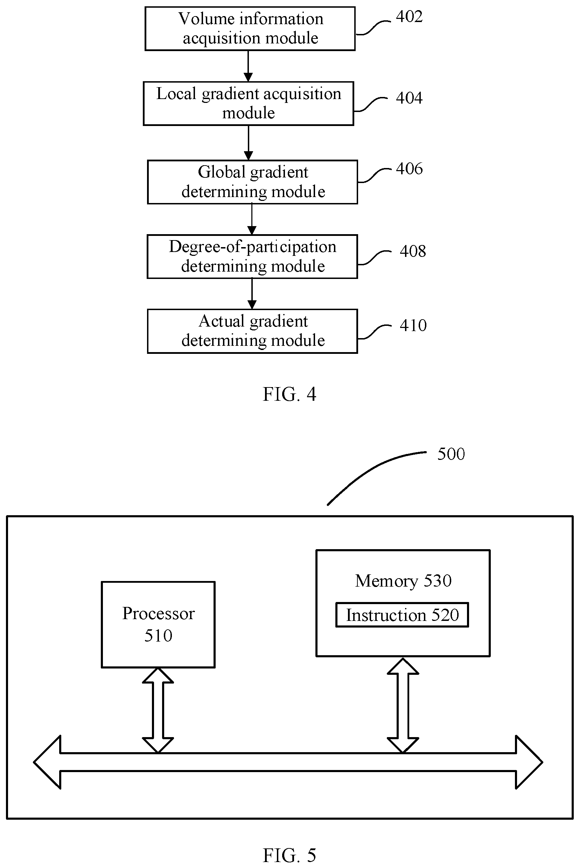

Based on the same idea, the embodiments of this specification further provide apparatuses corresponding to the previous methods. FIG. 4 is a schematic structural diagram of a model gradient determining apparatus based on federated learning according to some embodiments of this specification. As shown in FIG. 4, the apparatus can include the following: a volume information acquisition module 402, configured to obtain data volume information of a participating node, where the data volume information is used to indicate an amount of data used by the participating node to train a basic training model based on local data, and the local data includes user data of a target organization corresponding to the participating node; a local gradient acquisition module 404, configured to obtain a node local gradient obtained by training the basic training model based on the local data by the participating node; a global gradient determining module 406, configured to determine, based on the data volume information and the node local gradient, a global gradient of a federated learning model that the participating node participates in; a degree-of-participation determining module 408, configured to determine a degree of participation of the participating node based on the node local gradient of the participating node and the global gradient, where the degree of participation is used to indicate a degree of participation of the participating node in federated learning model training; and an actual gradient determining module 410, configured to determine an actual model gradient of the participating node based on the degree of participation.

Based on the same idea, the embodiments of this specification further provide devices corresponding to the previous methods.

FIG. 5 is a schematic structural diagram of a model gradient determining device based on federated learning according to some embodiments of this specification. As shown in FIG. 5, the device 500 can include the following: at least one processor 510; and a memory 530 communicatively connected to the at least one processor.

The memory 530 stores an instruction 520 that can be executed by the at least one processor 510, and the instruction is executed by the at least one processor 510 so that the at least one processor 510 can: obtain data volume information of a participating node, where the data volume information is used to indicate an amount of data used by the participating node to train a basic training model based on local data, and the local data includes user data of a target organization corresponding to the participating node; obtain a node local gradient obtained by training the basic training model based on the local data by the participating node; determine, based on the data volume information and the node local gradient, a global gradient of a federated learning model that the participating node participates in; determine a degree of participation of the participating node based on the node local gradient of the participating node and the global gradient, where the degree of participation is used to indicate a degree of participation of the participating node in federated learning model training; and determine an actual model gradient of the participating node based on the degree of participation.

Based on the same idea, the embodiments of this specification further provide a computer-readable medium corresponding to the previous methods. The computer-readable medium stores a computer-readable instruction, where the computer-readable instruction can be executed by a processor to implement the previously described model gradient determining method based on federated learning.

The embodiments in this specification are described in a progressive way. For same or similar parts of the embodiments, references can be made to the embodiments mutually. Each embodiment focuses on a difference from other embodiments. Particularly, the device shown in FIG. 5 is similar to a method embodiment, and therefore is described briefly. For related parts, references can be made to related descriptions in the method embodiment.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit (ASIC) chip. In addition, at present, instead of manually manufacturing an integrated circuit chip, this type of programming is mostly implemented by using "logic compiler" software. The software is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate methods. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using the computer-readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

The system, apparatus, module, or unit illustrated in the previous embodiments can be implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email receiving and sending device, a game console, a tablet computer, a wearable device, or any combination of these devices.

For ease of description, the apparatus above is described by dividing functions into various units. Certainly, when this application is implemented, a function of each unit can be implemented in one or more pieces of software and/or hardware.

A person skilled in the art should understand that some embodiments of this application can be provided as a method, a system, or a computer program product. Therefore, this application can use a form of hardware only embodiments, software only embodiments, or embodiments with a combination of software and hardware. Moreover, the embodiments of this application can use a form of a computer program product that is implemented on one or more computer-usable storage media (including but not limited to a disk memory, a CD-ROM, an optical memory, etc.) that include computer-usable program code.

This application is described with reference to the flowcharts and/or block diagrams of the method, the device (system), and the computer program product based on the embodiments of this application. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine so that the instructions executed by the computer or the processor of the another programmable data processing device generate a device for implementing a specific function in one or more processes in the flowcharts and/or in one or more blocks in the block diagrams.

These computer program instructions can be stored in a computer-readable memory that can instruct the computer or other programmable data processing devices to work in a specific way, so the instructions stored in the computer-readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device so that a series of operations and steps are performed on the computer or other programmable devices, thereby generating computer-implemented processing. Therefore, the instructions executed on the computer or other programmable devices provide steps for implementing a specific function in one or more processes in the flowcharts and/or in one or more blocks in the block diagrams.

In a typical configuration, a computing device includes one or more processors (CPU), an input/output interface, a network interface, and a memory.

The memory can include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data. Examples of the computer storage medium include, but are not limited to, a phase change random access memory (PRAM), a static RAM (SRAM), a dynamic RAM (DRAM), a RAM of another type, a ROM, an electrically erasable programmable ROM (EEPROM), a flash memory or another memory technology, a compact disc ROM (CD-ROM), a digital versatile disc (DVD) or another optical storage, a cassette, and a cassette magnetic disk storage, or another magnetic storage device or any other non-transmission medium. The computer storage medium can be configured to store information that can be accessed by a computing device. As described in this specification, the computer-readable medium does not include transitory media such as a modulated data signal and a carrier.

It is worthwhile to further note that, the terms "include", "contain", or their any other variants are intended to cover a non-exclusive inclusion, so a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that the embodiment of this application can be provided as a method, a system, or a computer program product. Therefore, this application can use a form of hardware only embodiments, software only embodiments, or embodiments with a combination of software and hardware. Moreover, this application can use a form of a computer program product that is implemented on one or more computer-usable storage media (including but not limited to a disk memory, a CD-ROM, an optical memory, etc.) that include computer-usable program code.

This application can be described in the general context of computer-executable instructions, for example, a program module. Generally, the program module includes a routine, a program, an object, a component, a data structure, etc. executing a specific task or implementing a specific abstract data type. This application can alternatively be practiced in distributed computing environments in which tasks are performed by remote processing devices that are connected through a communications network. In a distributed computing environment, the program module can be located in both local and remote computer storage media including storage devices.

The previous descriptions are merely embodiments of this application, and are not intended to limit this application. A person skilled in the art can make various modifications and changes to this application. Any modification, equivalent replacement, or improvement made without departing from the principle of this application shall fall within the scope of the claims in this application.

## Claims

1. A computer-implemented model gradient determining method based on federated learning, comprising:

   obtaining (202) data volume information of a participating node, wherein the participating node comprises a plurality of participating nodes, wherein the data volume information indicates an amount of data used by the participating node to train a basic training model based on local data, and the local data comprises user data of a target organization corresponding to the participating node;
   obtaining (204) a node local gradient based on training the basic training model based on the local data by the participating node;
   determining (206), based on the data volume information and the node local gradient, a global gradient of a federated learning model that the participating node participates in, wherein the global gradient comprises a plurality of global gradient factors, wherein the global gradient comprises the gradient obtained through a target quantity of rounds of iterative calculations;
   determining (208) a degree of participation of the participating node based on the node local gradient of the participating node and the global gradient, wherein the degree of participation indicates a degree of participation of the participating node in training the federated learning model; and
   determining (210) an actual model gradient of the participating node based on the degree of participation, wherein determining the actual model gradient of the participating node based on the degree of participation comprises:

      obtaining a trustworthiness parameter of the participating node, wherein the trustworthiness parameter represents a comprehensive degree of reliability of the participating node in the target quantity of rounds of calculation processes of the global gradient;
      determining a reputation degree of the participating node based on a relative contribution degree and the trustworthiness parameter, wherein the relative contribution degree is determined based on a node contribution degree of the participating node and the node contribution degree of each participating node of the plurality of participating nodes;
      determining a quantity of matching gradients corresponding to the participating node based on a ratio of the reputation degree of the participating node to a greatest reputation degree, wherein the greatest reputation degree represents the greatest reputation degree of reputation degrees of each of the plurality of participating nodes; and

      selecting global gradient factors of the quantity of matching gradients from the global gradient to obtain the actual model gradient.

2. The computer-implemented method according to claim 1, wherein after obtaining the node local gradient by training the basic training model based on the local data by the participating node, the method further comprises:

obtaining a marginal loss of the participating node, wherein the marginal loss is used to represent a degree of influence of the node local gradient of the participating node on performance of the federated learning model; and determining node mass of the participating node based on the marginal loss, and

wherein determining, based on the data volume information and the node local gradient, the global gradient of the federated learning model that the participating node participates in comprises:

determining, based on the data volume information, the node local gradient, and the node mass, the global gradient of the federated learning model that the participating node participates in.

3. The computer-implemented method according to claim 2, wherein obtaining the marginal loss of the participating node comprises:

determining a first reference global model based on the node local gradient of each participating node in the plurality of participating nodes,

determining a second reference global model based on a node local gradient of each participating node other than the participating node in the plurality of participating nodes,

determining a first model loss of the first reference global model based on a predetermined verification set

determining a second model loss of the second reference global model based on the predetermined verification set, and

determining the marginal loss of the participating node based on the first model loss and the second model loss.

4. The computer-implemented method according to claim 2,
wherein determining the node mass of the participating node based on the marginal loss comprises determining the node mass of the participating node based on a marginal loss of each participating node in the plurality of participating nodes and a normalization algorithm.

5. The computer-implemented method according to claim 2, wherein

the method further comprises:

determining a participating node with a marginal loss greater than or equal to a predetermined loss threshold in the plurality of participating nodes as an effective participating node, and

wherein determining, based on the data volume information, the node local gradient, and the node mass, the global gradient of the federated learning model that the participating node participates in comprises:

performing an aggregation operation on a node local gradient of each of the effective participating node based on data volume information of the participating node and node mass of the participating node, to obtain the global gradient.

6. The computer-implemented method according to claim 1,
wherein determining the degree of participation of the participating node based on the node local gradient of the participating node and the global gradient comprises:

determining a node contribution degree of each of the plurality of participating nodes based on a node local gradient of the participating node and the global gradient, and

determining the relative contribution degree of the participating node based on the node contribution degree of the participating node and the node contribution degree of each participating node.

7. The computer-implemented
method according to claim 1, wherein obtaining the trustworthiness parameter of the participating node comprises:

determining a first quantity of times that the participating node is determined as an effective participating node in the target quantity of rounds, wherein the effective participating node represents a participating node with a marginal loss greater than or equal to a predetermined loss threshold;

determining a second quantity of times that the participating node is determined as an ineffective participating node in the target quantity of rounds, wherein the ineffective participating node represents a participating node with a marginal loss less than the predetermined loss threshold; and

determining the trustworthiness parameter of the participating node based on the first quantity of times and the second quantity of times.

8. The computer-implemented

method according to claim 1, wherein the global gradient comprises a plurality of global gradient factors, and the node local gradient comprises a plurality of local gradient factors,
wherein the method further comprises:

obtaining a node influence degree of each global gradient factor relative to the participating node, wherein the node influence degree is used to indicate a degree that each global gradient factor is influenced by the participating node; and
sorting the global gradient factors in the global gradient based on the node influence degree, to obtain the sorted global gradient factors.
wherein selecting the global gradient factors of the quantity of matching gradients from the global gradient to obtain the actual model gradient comprises:
selecting global gradient factors of the quantity of matching gradients from the sorted global gradient factors based on a predetermined order, to obtain the actual model gradient.

9.  The computer-implemented
method according to claim 8, wherein obtaining the node influence degree of each global gradient factor relative to the participating node comprises:

determining a first distribution parameter corresponding to each local gradient factor in the local gradient of the participating node, wherein the first distribution parameter is used to indicate a proportion of each local gradient factor in the local gradient;
determining a second distribution parameter corresponding to each global gradient factor in the global gradient, wherein the second distribution parameter is used to indicate a proportion of each global gradient factor in the global gradient; and
determining the node influence degree of each global gradient factor relative to the participating node based on the first distribution parameter and the second distribution parameter.

10.  A model gradient determining device based on federated learning, comprising:

at least one processor; and
a memory communicatively connected to the at least one processor, wherein
the memory stores an instruction that can be executed by the at least one processor, and the instruction is executed by the at least one processor so that the at least one processor is configured to perform the method according to any one of claims 1 to 9.

11.  A computer-readable medium, storing a computer-readable instruction, wherein the computer-readable instruction can be executed by a processor to implement the model gradient determining method based on federated learning according to any one of claims 1 to 9.

**Patentansprüche**

1.  Computerimplementiertes Modellgradientenbestimmungsverfahren basierend auf föderiertem Lernen, das Folgendes umfasst:

Erhalten (202) von Datenvolumeninformationen eines teilnehmenden Knotens, wobei der teilnehmende Knoten mehrere teilnehmende Knoten umfasst, wobei die Datenvolumeninformationen eine Datenmenge angeben, die durch den teilnehmenden Knoten verwendet wird, um ein Basistrainingsmodell basierend auf lokalen Daten zu trainieren, und die lokalen Daten Benutzerdaten einer Zielorganisation umfassen, die dem teilnehmenden Knoten entspricht;
Erhalten (204) eines lokalen Knotengradienten, basierend auf dem Trainieren des Basistrainingsmodells basierend auf den lokalen Daten durch den teilnehmenden Knoten;
Bestimmen (206), basierend auf den Datenvolumeninformationen und dem lokalen Knotengradienten, eines globalen Gradienten eines föderierten Lernmodells, an dem der teilnehmende Knoten teilnimmt, wobei der globale Gradient mehrere globale Gradientenfaktoren umfasst, wobei der globale Gradient den Gradienten umfasst, der durch eine Zielmenge von Runden iterativer Berechnungen erhalten wird;
Bestimmen (208) eines Teilnahmegrades des teilnehmenden Knotens basierend auf dem lokalen Knotengradienten des teilnehmenden Knotens und dem globalen Gradienten, wobei der Teilnahmegrad einen Teilnahmegrad des teilnehmenden Knotens beim Trainieren des föderierten Lernmodells angibt; und
Bestimmen (210) eines tatsächlichen Modellgradienten des teilnehmenden Knotens basierend auf dem Teilnahmegrad, wobei das Bestimmen des tatsächlichen Modellgradienten des teilnehmenden Knotens basierend auf dem Teilnahmegrad Folgendes umfasst:

Erhalten eines Vertrauenswürdigkeitsparameters des teilnehmenden Knotens, wobei der Vertrauenswürdigkeitsparameter einen umfassenden Zuverlässigkeitsgrad des teilnehmenden Knotens in der Zielmenge von Runden von Berechnungsprozessen des globalen Gradienten repräsentiert;
Bestimmen eines Reputationsgrades des teilnehmenden Knotens basierend auf einem relativen Beitragsgrad und dem Vertrauenswürdigkeitsparameter, wobei der relative Beitragsgrad basierend auf einem Knotenbeitragsgrad des teilnehmenden Knotens und dem Knotenbeitragsgrad jedes teilnehmenden Knotens der mehreren teilnehmenden Knoten bestimmt wird;
Bestimmen einer Menge von übereinstimmenden Gradienten, die dem teilnehmenden Knoten entsprechen, basierend auf einem Verhältnis des Reputationsgrades des teilnehmenden Knotens zu einem größten Reputationsgrad, wobei der größte Reputationsgrad den größten Reputationsgrad von Reputationsgraden jedes der mehreren teilnehmenden Knoten repräsentiert; und
Auswählen globaler Gradientenfaktoren der Menge übereinstimmender Gradienten aus dem globalen Gradienten, um den tatsächlichen Modellgradienten zu erhalten.

2. Computerimplementiertes Verfahren nach Anspruch 1, wobei das Verfahren nach dem Erhalten des lokalen Knotengradienten durch Trainieren des Basistrainingsmodells basierend auf den lokalen Daten durch den teilnehmenden Knoten ferner Folgendes umfasst: Erhalten eines marginalen Verlusts des teilnehmenden Knotens, wobei der marginale Verlust verwendet wird, um einen Einflussgrad des lokalen Knotengradienten des teilnehmenden Knotens auf die Leistung des föderierten Lernmodells darzustellen; und

Bestimmen der Knotenmasse des teilnehmenden Knotens basierend auf dem marginalen Verlust, und
wobei das Bestimmen, basierend auf den Datenvolumeninformationen und dem lokalen Knotengradienten, des globalen Gradienten des föderierten Lernmodells, an dem der teilnehmende Knoten teilnimmt, Folgendes umfasst:
Bestimmen, basierend auf den Datenvolumeninformationen, dem lokalen Knotengradienten und der Knotenmasse, des globalen Gradienten des föderierten Lernmodells, an dem der teilnehmende Knoten teilnimmt.

3. Computerimplementiertes Verfahren nach Anspruch 2, wobei das Erhalten des marginalen Verlusts des teilnehmenden Knotens Folgendes umfasst:

Bestimmen eines ersten globalen Referenzmodells basierend auf dem lokalen Knotengradienten jedes teilnehmenden Knotens in den mehreren teilnehmenden Knoten,
Bestimmen eines zweiten globalen Referenzmodells basierend auf einem lokalen Knotengradienten jedes teilnehmenden Knotens außer dem teilnehmenden Knoten in den mehreren teilnehmenden Knoten,
Bestimmen eines ersten Modellverlusts des ersten globalen Referenzmodells basierend auf einem vorbestimmten Verifizierungssatz,
Bestimmen eines zweiten Modellverlusts des zweiten globalen Referenzmodells basierend auf dem vorbestimmten Verifizierungssatz, und
Bestimmen des marginalen Verlusts des teilnehmenden Knotens basierend auf dem ersten Modellverlust und dem zweiten Modellverlust.

4. Computerimplementiertes Verfahren nach Anspruch 2, wobei das Bestimmen der Knotenmasse des teilnehmenden Knotens basierend auf dem marginalen Verlust das Bestimmen der Knotenmasse des teilnehmenden Knotens basierend auf einem marginalen Verlust jedes teilnehmenden Knotens in den mehreren teilnehmenden Knoten und einem Normierungsalgorithmus umfasst.

5. Computerimplementiertes Verfahren nach Anspruch 2, wobei das Verfahren ferner Folgendes umfasst:

Bestimmen eines teilnehmenden Knotens mit einem marginalen Verlust, der größer als oder gleich einer vorbestimmten Verlustschwelle in den mehreren teilnehmenden Knoten ist, als ein effektiver teilnehmender Knoten, und
wobei das Bestimmen, basierend auf den Datenvolumeninformationen, dem lokalen Knotengradienten und der Knotenmasse, des globalen Gradienten des föderierten Lernmodells, an dem der teilnehmende Knoten teilnimmt, Folgendes umfasst:
Durchführen einer Aggregationsoperation an einem lokalen Knotengradienten jedes des effektiven teilnehmenden Knotens, basierend auf Datenvolumeninformationen des teilnehmenden Knotens und Knotenmasse des teilnehmenden Knotens, um den globalen Gradienten zu erhalten.

6. Computerimplementiertes Verfahren nach Anspruch 1, wobei das Bestimmen des Teilnahmegrades des teilnehmenden Knotens basierend auf dem lokalen Knotengradienten des teilnehmenden Knotens und dem globalen Gradienten Folgendes umfasst:

Bestimmen eines Knotenbeitragsgrades jedes der mehreren teilnehmenden Knoten basierend auf einem lokalen Knotengradienten des teilnehmenden Knotens und dem globalen Gradienten, und
Bestimmen des relativen Beitragsgrades des teilnehmenden Knotens basierend auf dem Knotenbeitragsgrad des teilnehmenden Knotens und dem Knotenbeitragsgrad jedes teilnehmenden Knotens.

7. Computerimplementiertes Verfahren nach Anspruch 1, wobei das Erhalten des Vertrauenswürdigkeitsparameters des teilnehmenden Knotens Folgendes umfasst:

Bestimmen einer ersten Menge von Malen, die der teilnehmende Knoten als ein effektiver teilnehmender Knoten in der Zielmenge von Runden bestimmt wird, wobei der effektive teilnehmende Knoten einen teilnehmenden Knoten mit einem marginalen Verlust repräsentiert, der größer als oder gleich einer vorbestimmten Verlustschwelle ist;
Bestimmen einer zweiten Menge von Malen, die der teilnehmende Knoten als ein unwirksamer teilnehmender Knoten in der Zielmenge von Runden bestimmt wird, wobei der unwirksame teilnehmende Knoten einen teilnehmenden Knoten mit einem marginalen Verlust repräsentiert, der kleiner als die vorbestimmte Verlustschwelle ist; und
Bestimmen des Vertrauenswürdigkeitsparameters des teilnehmenden Knotens basierend auf der ersten Menge von Malen und der zweiten Menge von Malen.

8. Computerimplementiertes Verfahren nach Anspruch 1, wobei der globale Gradient mehrere globale Gradientenfaktoren umfasst und der lokale Knotengradient mehrere lokale Gradientenfaktoren umfasst, wobei das Verfahren ferner Folgendes umfasst:

Erhalten eines Knoteneinflussgrades jedes globalen Gradientenfaktors relativ zu dem teilnehmenden Knoten, wobei der Knoteneinflussgrad verwendet wird, um einen Grad anzugeben, zu dem jeder globale Gradientenfaktor durch den teilnehmenden Knoten beeinflusst wird; und
Sortieren der globalen Gradientenfaktoren in dem globalen Gradienten basierend auf dem Knoteneinflussgrad, um die sortierten globalen Gradientenfaktoren zu erhalten.
wobei das Auswählen der globalen Gradientenfaktoren der Menge von übereinstimmenden Gradienten aus dem globalen Gradienten, um den tatsächlichen Modellgradienten zu erhalten, Folgendes umfasst:
Auswählen globaler Gradientenfaktoren der Menge von übereinstimmenden Gradienten aus den sortierten globalen Gradientenfaktoren basierend auf einer vorbestimmten Reihenfolge, um den tatsächlichen Modellgradienten zu erhalten.

9. Computerimplementiertes Verfahren nach Anspruch 8, wobei das Erhalten des Knoteneinflussgrades jedes globalen Gradientenfaktors relativ zu dem teilnehmenden Knoten Folgendes umfasst:

Bestimmen eines ersten Verteilungsparameters, der jedem lokalen Gradientenfaktor in dem lokalen Gradienten des teilnehmenden Knotens entspricht, wobei der erste Verteilungsparameter verwendet wird, um einen Anteil jedes lokalen Gradientenfaktors in dem lokalen Gradienten anzugeben;
Bestimmen eines zweiten Verteilungsparameters, der jedem globalen Gradientenfaktor in dem globalen Gradienten entspricht, wobei der zweite Verteilungsparameter verwendet wird, um einen Anteil jedes globalen Gradientenfaktors in dem globalen Gradienten anzugeben; und
Bestimmen des Knoteneinflussgrades jedes globalen Gradientenfaktors relativ zu dem teilnehmenden Knoten, basierend auf dem ersten Verteilungsparameter und dem zweiten Verteilungsparameter.

10. Modellgradientenbestimmungsvorrichtung basierend auf föderiertem Lernen, die Folgendes umfasst:

mindestens einen Prozessor; und

einen Speicher, der kommunikativ mit dem mindestens einen Prozessor verbunden ist, wobei der Speicher eine Anweisung speichert, die durch den mindestens einen Prozessor ausgeführt werden kann, und die Anweisung durch den mindestens einen Prozessor ausgeführt wird, so dass der mindestens eine Prozessor dazu ausgelegt ist, das Verfahren nach einem der Ansprüche 1 bis 9 durchzuführen.

11. Computerlesbares Medium, das eine computerlesbare Anweisung speichert, wobei die computerlesbare Anweisung durch einen Prozessor ausgeführt werden kann, um das Modellgradientenbestimmungsverfahren basierend auf föderiertem Lernen nach einem der Ansprüche 1 bis 9 zu implementieren.

**Revendications**

1. Procédé, mis en œuvre par ordinateur, de détermination de gradient de modèle basé sur un apprentissage fédéré, comprenant :

l'obtention (202) d'informations de volume de données d'un nœud participant, le nœud participant comprenant une pluralité de nœuds participants, les informations de volume de données indiquant une quantité de données utilisée par le nœud participant pour entraîner un modèle d'entraînement de base sur la base de données locales, et les données locales comprenant des données utilisateur d'une organisation cible correspondant au nœud participant ;
l'obtention (204) d'un gradient local de nœud sur la base de l'entraînement du modèle d'entraînement de base sur la base des données locales par le nœud participant ;
la détermination (206), sur la base des informations de volume de données et du gradient local de nœud, d'un gradient global d'un modèle d'apprentissage fédéré auquel le nœud participant participe, le gradient global comprenant une pluralité de facteurs de gradient global, le gradient global comprenant le gradient obtenu au moyen d'un nombre cible de cycles de calculs itératifs ;
la détermination (208) d'un degré de participation du nœud participant sur la base du gradient local de nœud du nœud participant et du gradient global, le degré de participation indiquant un degré de participation du nœud participant à l'entraînement du modèle d'apprentissage fédéré ; et
la détermination (210) d'un gradient de modèle effectif du nœud participant sur la base du degré de participation, la détermination du gradient de modèle effectif du nœud participant sur la base du degré de participation comprenant :

l'obtention d'un paramètre de fiabilité du nœud participant, le paramètre de fiabilité représentant un degré total de fiabilité du nœud participant dans le nombre cible de cycles de processus de calcul du gradient global ;
la détermination d'un degré de réputation du nœud participant sur la base d'un degré de contribution relative et du paramètre de fiabilité, le degré de contribution relative étant déterminé sur la base d'un degré de contribution de nœud du nœud participant et du degré de contribution de nœud de chaque nœud participant de la pluralité de nœuds participants ;
la détermination d'un nombre de gradients concordants correspondant au nœud participant sur la base d'un rapport du degré de réputation du nœud participant sur un plus grand degré de réputation, le plus grand degré de réputation représentant le plus grand degré de réputation parmi des degrés de réputation de chacun de la pluralité de nœuds participants ; et
la sélection, à partir du gradient global, de facteurs de gradient global du nombre de gradients concordants afin d'obtenir le gradient de modèle effectif.

2. Procédé mis en œuvre par ordinateur selon la revendication 1, le procédé comprenant en outre, après l'obtention du gradient local de nœud par entraînement du modèle d'entraînement de base sur la base des données locales par le nœud participant :

l'obtention d'une perte marginale du nœud participant, la perte marginale étant utilisée pour représenter un degré d'influence du gradient local de nœud du nœud participant sur les performances du modèle d'apprentissage fédéré ; et
la détermination d'une masse de nœud du nœud participant sur la base de la perte marginale, et
dans lequel la détermination, sur la base des informations de volume de données et du gradient local de nœud, du gradient global du modèle d'apprentissage fédéré auquel le nœud participant participe comprend :
la détermination, sur la base des informations de volume de données, du gradient local de nœud et de la masse de nœud, du gradient global du modèle d'apprentissage fédéré auquel le nœud participant participe.

3. Procédé mis en œuvre par ordinateur selon la revendication 2, dans lequel l'obtention de la perte marginale du nœud participant comprend :

la détermination d'un premier modèle global de référence sur la base du gradient local de nœud de chaque nœud participant parmi la pluralité de nœuds participants,
la détermination d'un deuxième modèle global de référence sur la base d'un gradient local de nœud de chaque nœud participant autre que le nœud participant parmi la pluralité de nœuds participants,
la détermination d'une première perte de modèle du premier modèle global de référence sur la base d'un ensemble de vérification prédéterminé,
la détermination d'une deuxième perte de modèle du deuxième modèle global de référence sur la base de l'ensemble de vérification prédéterminé, et
la détermination de la perte marginale du nœud participant sur la base de la première perte de modèle et de la deuxième perte de modèle.

4. Procédé mis en œuvre par ordinateur selon la revendication 2, dans lequel la détermination de la masse de nœud du nœud participant sur la base de la perte marginale comprend la détermination de la masse de nœud du nœud participant sur la base d'une perte marginale de chaque nœud participant parmi la pluralité de nœuds participants et d'un algorithme de normalisation.

5. Procédé mis en œuvre par ordinateur selon la revendication 2, le procédé comprenant en outre :

la détermination, parmi la pluralité de nœuds participants, en tant que nœud de participation efficace, d'un nœud participant dont la perte marginale est supérieure ou égale à un seuil de perte prédéterminé, et dans lequel la détermination, sur la base des informations de volume de données, du gradient local de nœud et de la masse de nœud, du gradient global du modèle d'apprentissage fédéré auquel le nœud participant participe comprend :
la réalisation d'une opération d'agrégation sur un gradient local de nœud de chaque nœud participant efficace sur la base des informations de volume de données du nœud participant et de la masse de nœud du nœud participant, afin d'obtenir le gradient global.

6. Procédé mis en œuvre par ordinateur selon la revendication 1, dans lequel la détermination du degré de participation du nœud participant sur la base du gradient local de nœud du nœud participant et du gradient global comprend :

la détermination d'un degré de contribution de nœud de chacun de la pluralité de nœuds participants sur la base d'un gradient local de nœud du nœud participant et du gradient global, et
la détermination du degré de contribution relative du nœud participant sur la base du degré de contribution de nœud du nœud participant et du degré de contribution de nœud de chaque nœud participant.

7. Procédé mis en œuvre par ordinateur selon la revendication 1, dans lequel l'obtention du paramètre de fiabilité du nœud participant comprend :

la détermination d'un premier nombre de fois où le nœud participant est déterminé en tant que nœud participant efficace dans le nombre cible de cycles, le nœud participant efficace représentant un nœud participant dont la perte marginale est supérieure ou égale à un seuil de perte prédéterminé ;
la détermination d'un deuxième nombre de fois où le nœud participant est déterminé en tant que nœud participant inefficace dans le nombre cible de cycles, le nœud participant inefficace représentant un nœud participant dont la perte marginale est inférieure au seuil de perte prédéterminé ; et
la détermination du paramètre de fiabilité du nœud participant sur la base du premier nombre de fois et du deuxième nombre de fois.

8. Procédé mis en œuvre par ordinateur selon la revendication 1, dans lequel le gradient global comprend une pluralité de facteurs de gradient global, et le gradient local de nœud comprend une pluralité de facteurs de gradient local, le procédé comprenant en outre :

l'obtention d'un degré d'influence de nœud de chaque facteur de gradient global par rapport au nœud participant, le degré d'influence de nœud étant utilisé pour indiquer un degré selon lequel chaque facteur de gradient global est influencé par le nœud participant ; et

le tri des facteurs de gradient global dans le gradient global sur la base du degré d'influence de nœud, afin d'obtenir les facteurs de gradient global triés .

dans lequel la sélection, à partir du gradient global, des facteurs de gradient global du nombre de gradients concordants afin d'obtenir le gradient de modèle effectif comprend :

la sélection, à partir des facteurs de gradient global triés, de facteurs de gradient global du nombre de gradients concordants selon un ordre prédéterminé, afin d'obtenir le gradient de modèle effectif.

9. Procédé mis en œuvre par ordinateur selon la revendication 8, dans lequel l'obtention du degré d'influence de nœud de chaque facteur de gradient global par rapport au nœud participant comprend :

la détermination d'un premier paramètre de distribution correspondant à chaque facteur de gradient local dans le gradient local du nœud participant, le premier paramètre de distribution étant utilisé pour indiquer une proportion de chaque facteur de gradient local dans le gradient local ;

la détermination d'un deuxième paramètre de distribution correspondant à chaque facteur de gradient global dans le gradient global, le deuxième paramètre de distribution étant utilisé pour indiquer une proportion de chaque facteur de gradient global dans le gradient global ; et

la détermination du degré d'influence de nœud de chaque facteur de gradient global par rapport au nœud participant sur la base du premier paramètre de distribution et du deuxième paramètre de distribution.

10. Dispositif de détermination de gradient de modèle basé sur un apprentissage fédéré, comprenant :

au moins un processeur ; et
une mémoire connectée en communication avec l'au moins un processeur,
la mémoire stockant une instruction exécutable par l'au moins un processeur, et l'instruction étant exécutée par l'au moins un processeur de sorte que l'au moins un processeur est configuré pour réaliser le procédé selon l'une quelconque des revendications 1 à 9.

11. Support lisible par ordinateur, stockant une instruction lisible par ordinateur, l'instruction lisible par ordinateur étant exécutable par un processeur pour mettre en œuvre le procédé de détermination de gradient de modèle basé sur un apprentissage fédéré selon l'une quelconque des revendications 1 à 9.

FIG. 1

Obtain data volume information of a participating node ⟋ 202

Obtain a node local gradient obtained by training a basic training model based on local data by the participating node ⟋ 204

Determine, based on the data volume information and the node local gradient, a global gradient of a federated learning model that the participating node participates in ⟋ 206

Determine a degree of participation of the participating node based on the node local gradient of the participating node and the global gradient ⟋ 208

Determine an actual model gradient of the participating node based on the degree of participation ⟋ 210

FIG. 2

| | Participating node | Server |
|---|---|---|
| **Node training phase** | 304<br>Obtain a basic training model | 302<br>Send the basic training model to the participating node |
| | 306<br>Train the model based on local data to obtain a trained model | |
| | 308<br>Determine a node local gradient | |
| **Gradient aggregation phase** | 310<br>Send the node local gradient and data volume information to the server | 312<br>Obtain the node local gradient and the data volume information of the participating node |
| | | 314<br>Determine a global gradient of a federated learning model |
| **Gradient determining phase** | | 316<br>Determine a contribution degree and a reputation degree of the participating node |
| | | 318<br>Determine a quantity of matching gradients matching the participating node |
| | | 320<br>Sort global gradient factors in the global gradient |
| | | 322<br>Select global gradient factors of the quantity of matching gradients from the sorted global gradient factors based on a predetermined order |
| | | 324<br>Send a determined actual model gradient matching the participating node to the participating node |

FIG. 3

Volume information
acquisition module — 402

↓

Local gradient acquisition
module — 404

↓

Global gradient
determining module — 406

↓

Degree-of-participation
determining module — 408

↓

Actual gradient
determining module — 410

FIG. 4

— 500

Processor
510

Memory 530

Instruction 520

FIG. 5